# EUROPÄISCHE PATENTSCHRIFT

(11) **EP 3 201 978 B1**
(45) Veröffentlichungstag und Bekanntmachung des Hinweises auf die Patenterteilung: **11.04.2018**
(21) Anmeldenummer: 16762814.8
(22) Anmeldetag: 08.09.2016
(51) Int. Cl.: H01M 4/134, H01M 4/38, H01M 10/0525, H01M 10/0567, H01M 10/0568, H01M 10/0569

(54) **NITRILE UND AMINE ALS ELEKTROLYTBESTANDTEILE FÜR LITHIUM-IONEN-BATTERIEN**
NITRILES AND AMINES AS ELECTROLYTE COMPONENTS FOR LITHIUM-ION BATTERIES
NITRILES ET AMINES UTILISÉS EN TANT QUE CONSTITUANTS D'ÉLECTROLYTE POUR DES BATTERIES LITHIUM-ION

(30) Priorität: 28.09.2015 DE 102015218634
(43) Veröffentlichungstag der Anmeldung: 09.08.2017
(73) Patentinhaber: Wacker Chemie AG, 81737 München (DE)
(72) Erfinder: BRÄUNLING, Daniel, 80807 München (DE); DEUBEL, Frank, 80939 München (DE); KRATZL, Margit, 85376 Hetzenhausen (DE)
(74) Vertreter: Fritz, Helmut
(86) Internationale Anmeldenummer: PCT/EP2016/071154
(87) Internationale Veröffentlichungsnummer: WO 2017/055048

(56) Entgegenhaltungen:
- WO-A1-2013/026854
- DE-T5-112012 004 415

## Beschreibung

Die Erfindung betrifft einen Elektrolyten, der aprotisches Lösungsmittel, lithiumhaltiges Leitsalz, Vinylencarbonat, Nitril und Amin umfasst, sowie eine Lithium-Ionen-Batterie. Lithium-Ionen-Batterien gehören zu den aussichtsreichsten Systemen für mobile Anwendungen. Die Einsatzgebiete reichen dabei von hochwertigen Elektronikgeräten bis hin zu Batterien für Kraftfahrzeuge mit Elektroantrieb.

Elektrolytstammlösungen für Lithium-Ionen-Batterien auf Basis cyclischer/aliphatischer Carbonate sind vielfach beschrieben und bilden als Hauptkomponenten die Basis der meisten Elektrolytgrundzusammensetzungen. Vinylencarbonat (VC), welches als Filmbildungsadditiv den Aufbau der solid-elektrolyteinterphase (SEI) unterstützen soll, wird typischerweise meist in Mengen 2-10 Gew.-% zugegeben. Dokument DE 11 2012 004415 T5 offenbart einen Elektrolyten mit einer Vinylencarbonat-Konzentration von 0,5 bis 5 Gew.-%. In US7476469 sind auch Stammlösungen mit einem höheren VC-Anteil für ein Anodenmaterial bestehend aus dünnen amorphen/mikrokristallinen Silicium-Schichten beschrieben.

Gu-Yeon Kim and J.R. Dahn, Journal of The Electrochemical Society, 162 (3) A437-A447 (2015) beschreiben die Anwendung einiger Nitrile (Succinonitril SN, Adiponitril AN, Pimelonitril PN) als Elektrolytadditive für NMC442//Graphit-Vollzellen. Eine Verbesserung des Kapazitätsverlustes bei gleichzeitiger Minimierung der Gasbildung für Zyklen-Experimente bei 60 °C wird beschrieben. Außerdem wird nach Zugabe von SN eine verbesserte Oxidationsstabilität des Elektrolyten beobachtet. Daraus resultiert in Folge eine Verbesserung der Zyklenstabilität mit NMC442-Kathodenmaterial (> 4,4V).

In DE10027626 wird zum Stand der Technik, Tributylamin als Elektrolytadditiv zum Abfangen von H₂O und HF beschrieben. Tributylamin ist nicht oxidationsstabil und wird bei ca. 3,5 V gegen Li/Li⁺ irreversibel zersetzt.
Tributylamin als Elektrolytadditiv trägt zur Verbesserung der Lagerstabilität der Zelle bei indem es das Leitsalz LiPF₆ stabilisiert, beschrieben in DE69027143.
In US8551661 werden substituierte/nicht-substituierte Amine, wie Trialkylamine, Arylamine und heterozyklische Amine als erstes mögliches Additiv in Kombination mit Li(C₂O₄)BF₂ als zweitem Additiv verwendet. Diese Additivkombination, eingesetzt in Carbonat-basierten Elektrolytmischungen, zeigten erhöhte Zyklenstabilitäten und Verbesserungen in der kalendarischen Alterung.

Aufgrund einer starken Volumenausdehnung von Si-haltigen Anodenmaterialien während der Zyklisierung ist die Zyklenstabilität von Li-Ionen-Batterien mit Si-haltigen Anodenmaterialien noch unzureichend. Die in den ersten Zyklen durch elektrochemische Zersetzung einzelner Elektrolytbestandteile gebildete SEI-Schicht hält den starken mechanischen Belastungen nicht stand. Eine fortwährende Nachbildung der SEI-Schicht führt zur Verarmung/zum Verbrauch einzelner Elektrolytbestandteile und damit zu einer kontinuierlichen Abnahme der Kapazität der Zelle mit steigender Zyklenzahl.

Gegenstand der Erfindung ist ein Elektrolyt, der
100 Gewichtsteile aprotisches Lösungsmittel,
1 bis 50 Gewichtsteile lithiumhaltiges Leitsalz,
5 bis 100 Gewichtsteile Vinylencarbonat,
0,5 bis 20 Gewichtsteile Nitril und
0,1 bis 10 Gewichtsteile Amin enthält.

Überraschend wurde gefunden, dass der Kapazitätserhalt von Lithium-Ionen-Batterien während der Zyklisierung durch den Einsatz einer Kombination aus Nitrilen und Aminen als Additiv in VC-reichen Elektrolytstammlösungen signifikant verbessert werden kann. Der kontinuierliche Kapazitätserhalt ist sogar besser als bei der gewählten Referenzelektrolytmischung ausgehend von literaturbekannten Elektrolytzusammensetzungen für Si-haltige Anoden [Kawashima, A. et al., Journal of The Electrochemical Society 2011, 158, A798-A801; Aurbach, D. et al., Langmuir 2012, 28, 965-976]. Die Referenzelektrolytmischung besteht aus Ethylmethylcarbonat (EMC) und Fluorethylencarbonat (FEC) mit einem geringen Anteil an VC.

Als Nitrile werden vorzugsweise eingesetzt die Nitrile von Mono- oder Polycarbonsäuren, die vorzugsweise 2 bis 20 Kohlenstoffatome, insbesondere 4 bis 12 Kohlenstoffatome enthalten.

Bevorzugt sind die Nitrile der aliphatischen, gesättigten Monocarbonsäuren, wie Essig-, Propion-, Butter-, Valerian- und Capronsäure und der Fettsäuren mit bis zu 18 Kohlenstoffatomen, insbesondere Valeronitril (VN).

Bevorzugt sind auch die Dinitrile der aliphatischen, gesättigten Dicarbonsäuren, wie Malon-, Bernstein-, Glutar-, Adipin-, Pimelin- und Suberinsäure.

Bevorzugt sind auch silylierte Nitrile der aliphatischen, gesättigten Monocarbonsäuren mit bis zu 18 Kohlenstoffatomen, insbesondere das aus US 20140356735 bekannte 3-(Fluoro-dimethyl-silyl)-butan-nitril (FSN).

Bevorzugt sind Nitrile mit einem Siedepunkt von mindestens 120°C bei 1013 hPa, insbesondere mindestens 150°C bei 1013 hPa.

Vorzugsweise enthält der Elektrolyt 1 bis 10 Gewichtsteile, insbesondere 2 bis 8 Gewichtsteile Nitril.

Die Amine werden bevorzugt ausgewählt aus primären, sekundären und tertiären aliphatischen und aromatischen Aminen.
Es können Monoamine zum Einsatz sowie Polyamine, die sowohl primäre, sekundäre als auch tertiäre Amin-Funktionen aufweisen.

Bevorzugte Monoamine weisen die allgemeine Formel (I)

NR¹R²R³ (I),

auf, in der
- **R¹**, **R²**, **R³,**: H oder einwertigen Kohlenwasserstoffrest mit 1-30 Kohlenstoffatomen, der substituiert sein kann mit Substituenten, die ausgewählt werden aus F-, Cl- und OR⁴, bei dem nicht benachbarte -CH₂-Einheiten ersetzt sein können durch Einheiten, die ausgewählt werden aus -C(=O)- und -O- und
- **R⁴**: Alkylrest mit 1-10 Kohlenstoffatomen bedeuten.

Die einwertigen Kohlenwasserstoffreste **R¹**, **R²**, **R³** können linear, zyklisch, verzweigt, aromatisch, gesättigt oder ungesättigt sein. Vorzugsweise weisen die Kohlenwasserstoffreste **R¹, R², R³** 1 bis 20 Kohlenstoffatome auf, besonders bevorzugt sind Alkylreste mit 1 bis 6 Kohlenstoffatomen, Alkylarylreste, Arylalkylreste und Phenylreste.

Wenn zwei oder drei der Reste **R¹ R², R³** miteinander verbunden sind, können diese einen mono- oder bicyclischen Kohlenwasserstoffring bilden.

Bevorzugt sind die tertiären Amine, bei denen in der allgemeinen Formel (I) **R¹, R², R³** einwertige insbesondere nicht substituierte Kohlenwasserstoffreste mit 1-30, vorzugsweise 2 bis 10 Kohlenstoffatomen bedeuten.

Bevorzugte Polyamine weisen die allgemeine Formel (II)

R⁵₂N-(CR⁶₂)ₐ-(NR⁷-(CR⁶₂)_{b})_{c}-NR⁵₂ (II),

auf, in der
**R⁵, R⁶, R⁷** H oder Kohlenwasserstoffreste mit 1-18 Kohlenstoffatomen, die substituiert sein können mit Substituenten, die ausgewählt werden aus F-, Cl- und OH- und bei denen nicht benachbarte -CH₂-Einheiten ersetzt sein können durch Einheiten, die ausgewählt werden aus -C(=O)- und -O-,
**a, b** ganzzahlige Werte von 1 bis 6 und
**c** den Wert 0 oder einen ganzzahligen Wert von 1 bis 40 bedeuten.
**a, b** bedeuten vorzugsweise die Werte 2 oder 3.
**c** bedeutet vorzugsweise einen ganzzahligen Wert von 1 bis 6. Vorzugsweise sind **a** und **b** gleich.

Beispiele für besonders bevorzugte Polyamine (A) der allgemeinen Formel (II) sind:
Diethylentriamin (H₂N-CH₂CH₂-NH-CH₂CH₂-NH₂)
Triethylentetramin (H₂N-CH₂CH₂-(NH-CH₂CH₂-)₂-NH₂)
Tetraethylenpentamin (H₂N-CH₂CH₂-(NH-CH₂CH₂-)₃-NH₂)
Pentaethylenhexamin (H₂N-CH₂CH₂-(NH-CH₂CH₂-)₄-NH₂)
Hexaethylenheptamin (H₂N-CH₂CH₂-(NH-CH₂CH₂-)₅-NH₂)
Gemische der o.g. Amine, wie sie als technische Produkte käuflich erhältlich sind z.B. AMIX1000® (BASF SE).

Beispiele für weitere bevorzugte Monoamine und Polyamine sind Octylamin, Nonylamin, Decylamin, Undecylamin, Dodecylamin (Laurylamin), Tributylamin, Triisooctylamin, Tridecylamin, Tridecylamin (Isomerengemisch), Tetradecylamin (Myristylamin), Pentadecylamin, Hexadecylamin (Cetylamin), Heptadecylamin, Octadecylamin (Stearylamin), 4-Hexylanilin, 4-Heptylanilin, 4-Octylanilin, 2,6-Diisopropylanilin, 4-Ethoxyanilin, N-Methylanilin, N-Ethyl-anilin, N-Propylanilin, N-Butylanilin, N-Pentylanilin, N-Hexylanilin, N-Octylanilin, N-Cyclohexylanilin, Dicyclohexylamin, p-Toluidin, Indolin, 2-Phenylethylamin, 1-Phenylethylamin, N-Methyldecylamin, Benzylamin, N,N-Dimethylbenzylamin, 1-Methylimidazol, 2-Ethylhexylamin, Dibutylamin, Dihexylamin, Di-(2-ethylhexylamin), 3,3'-Dimethyl-4,4'-diaminodicyclohexylmethan, 4,4'-Diaminodicyclohexylmethan, Ditridecylamin (Isomerengemisch), Isophorondiamin, N,N,N',N'-Tetramethyl-1,6-hexandiamin, N,N-Dimethylcyclohexylamin, Octamethylendiamin, 2,6-Xylidin, 4,7,10-Trioxatridecan-1,13-diamin, 4,9-Dioxadodecan-1,12-diamin, Di-(2-methoxyethyl)amin, Bis(2-dimethylaminoethyl)ether, Polyetheramin D230® (BASF SE), 2-(Diisopropylamino)ethylamin, Pentamethyldiethylentriamin, N-(3-Aminopropyl)imidazol, 1,2-Dimethylimidazol, 2,2'-Dimorpholinodiethylether, Dimethylaminoethoxyethanol, Bis(2-dimethylaminoethyl)ether, Lupragen®N600 - S-Triazin (BASF AG), 1,8-Diazabicyclo-5,4,0-undecen-7 (DBU), 3-(2-Aminoethylamino)propylamin, 3-(Cyclohexylamino)propylamin, Dipropylentriamin, N4-Amin (N,N'-Bis(3-aminopropyl)-ethylendiamin), AMIX M (BASF AG) (=hochsiedende Morpholinderivate), 1-(2-Hydroxyethyl)piperazin, 1-Vinylimidazol, 1-Hexylimidazol, 1-Octylimidazol, 1-(2-Ethylhexyl-)imidazol.

Bevorzugt sind Amine mit einem Siedepunkt von mindestens 120°C bei 1013 hPa, insbesondere mindestens 150°C bei 1013 hPa.

Vorzugsweise enthält der Elektrolyt 0,5 bis 8 Gewichtsteile, insbesondere 1 bis 5 Gewichtsteile Amin.

Das aprotische Lösungsmittel wird vorzugsweise ausgewählt aus organischen Carbonaten, wie Dimethylcarbonat, Diethylcarbonat, Ethylmethylcarbonat, Ethylencarbonat, Vinylencarbonat, Propylencarbonat, Butylencarbonat; cyclischen und linearen Estern, wie Methylacetat, Ethylacetat Butylacetat, Propylpropionat, Ethylbutyrat, Ethyl-isobutyrat; cyclischen und linearen Ethern, wie 2-Methyltetrahydrofuran, 1,2-Diethoxymethan, THF, Dioxan, 1,3-Dioxolan, Diisopropylether, Diethylenglycoldimethylether; Ketonen, wie Cyclopentanon, Diisopropylketon, Methyl-isobutylketon; Lactonen, wie γ-Butyrolacton; Sulfolane, Dimethylsulfoxid, Formamid, Dimethylformamid, 3-Methyl-1,3-oxazolidine-2-on und Gemischen dieser Lösungsmittel.
Besonders bevorzugt sind die vorstehend beschriebenen organischen Carbonate.

Der Elektrolyt enthält vorzugsweise 5 bis 30 Gewichtsteile, insbesondere 10 bis 20 Gewichtsteile lithiumhaltiges Leitsalz. Das lithiumhaltige Leitsalz wird vorzugsweise ausgewählt aus LiPF₆, LiBF₄, LiClO₄, LiAsF₆, (LiB(C₂O₄)₂, LiBF₂(C₂O₄)), LiSO₃CₓF₂ₓ₊₁, LiN(SO₂CₓF₂ₓ₊₁)₂ und LiC(SO₂CₓF₂ₓ₊₁)₃, wobei x ganzzahlige Werte von 0 bis 8 einnimmt, und deren Mischungen.

Der Elektrolyt enthält vorzugsweise 10 bis 70 Gewichtsteile, besonders bevorzugt 20 bis 50 Gewichtsteile insbesondere 12 bis 30 Gewichtsteile Vinylencarbonat (VC).

Die Elektrolyte können, wie beispielsweise in DE10027626A beschrieben, auch weitere Additive, wie organische Isocyanate zur Herabsetzung des Wassergehaltes, HF-Abfänger, Lösungsvermittler für LiF, organische Lithiumsalze und/oder Komplexsalze enthalten.

Ebenfalls Gegenstand der Erfindung ist eine Lithium-Ionen-Batterie, welche Kathode, Anode, Separator und den vorstehend beschriebenen Elektrolyten umfasst.

Die negative Elektrode der Lithium-Ionen-Batterie (Anode) umfasst vorzugsweise ein Material, das reversibel Lithiumionen aufnehmen und wieder abgeben kann, wie beispielsweise metallisches Lithium, Kohlenstoff, wie Ruß oder Graphit, Silicium, Zinn, Aluminium oder Blei, bevorzugt Graphit und/oder Silicium. Die positive Elektrode der Lithium-Ionen-Batterie (Kathode) umfasst vorzugsweise ein Lithium-Übergangmetall-Oxid oder ein Lithium-Übergangsmetall-Phosphat. Bevorzugte Übergangmetalle sind Ti, V, Cr, Mn, Co, Fe, Ni, Mo, W. Bevorzugte Lithium-Übergangmetall-Oxide sind LiCoO₂, LiCoO₂, LiNiO₂, LiMnO₂, LiMn₂O₄, Li(CoNi)O₂, Li(CoV)O₂, Li(CoFe)O_{2.} Bevorzugte Lithium-Übergangsmetall-Phosphate sind LiCoPO₄, Li(NiMn)O₂ und LiNiPO₄. Die Elektroden der Lithium-Ionen-Batterie können weitere Additive enthalten, die z.B. die Leitfähigkeit erhöhen, Bindemittel, Dispergiermittel und Füllstoffe. Es können die weiteren Additive eingesetzt werden, welche in EP785586A beschrieben sind.

Ebenfalls Gegenstand der Erfindung ist die Verwendung des vorstehend beschriebenen Elektrolyten in einer Lithium-Ionen-Batterie.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele:

### 1. Referenzelektrolytmischung mit Ethylmethylcarbonat (EMC) und Fluorethylencarbonat (FEC) (nicht erfindungsgemäß)

Es wurde ausgehend von literaturbekannten Elektrolytzusammensetzungen [Kawashima, A. et al., Journal of The Electrochemical Society 2011, 158, A798-A801; Aurbach, D. et al., Langmuir 2012, 28, 965-976] eine Mischung hergestellt aus FEC/EMC im Volumenverhältnis 30:70. Darin wurden 2 Gew.-% Vinylencarbonat und 1 M LiPF₆ gelöst.

### 2. Elektrolytmischung mit Pentannitril und Tributylamin

Es wurde eine Mischung hergestellt aus Vinylencarbonat/Diethylcarbonat im Volumenverhältnis 30:70. Darin wurden 5 Gew.-% n-Pentannitril (Valeronitril) und 2 Gew.- % Tributylamin und 1 M LiPF₆ gelöst.

### 3. Elektrolytmischung mit 3-(Fluoro-dimethyl-silyl)-butan- nitril und Tributylamin

Es wurde eine Mischung hergestellt aus Vinylencarbonat/Diethylcarbonat im Volumenverhältnis 30:70. Darin wurden 10 Gew.-% Fluoro-dimethyl-silyl-butan-nitril und 2 Gew.-% Tributylamin und 1 M LiPF₆ gelöst.

**Verwendete Elektroden und Zellbau:** Mit den Elektrolytmischungen aus Beispiel 1,2 und 3 wurden Vollzellen (Typ CR2032) mit Si/Graphit Anode und NMC (Nickel-Mangan-Kobalt) gebaut. Die Elektrolytmenge lag konstant bei 80 µl. Als Separator wurden GF Type D Glass Microfibre Filters (Whatman) verwendet. Die eingesetzte Anode bestand zu 20 % aus Silicium (nicht aggregierte Partikel mit einer mittleren Partikelgröße von ∼ 180 nm), 60 % Graphit (SFG 6), 8 % Binder (CMC 1380) und 12 % Leitruß (Super P). Bei der verwendeten Kathode handelte es sich um ein Standardmaterial bestehend aus 94 % NMC111, 2 % Binder und 4 % Leitmaterial. Das eingesetzte Kapazitätsverhältnis von Kathode zu Anode betrug 2,0/2,1 mAh/cm². An den gebauten Zellen wurden jeweils Entladekapazitäten im ersten Zyklus Z1 sowie der Kapazitätsrückhalt nach 100 (Rückhalt Z100) und 300 Zyklen (Rückhalt Z300) bestimmt. Die Ergebnisse sind in Tabelle 1 aufgeführt.

**Geräte und Messmethoden:** Die elektrochemische Testung erfolgte an einem Prüfstand BaSyTeC CTS-Lab Battery Test System in Vollzellen - Knopfzellen. Die Zellen wurden zunächst im Spannungsfenster von 4,2 -3,0 V zwei Zyklen mit C/10 und einem sich jeweils anschließenden CV-Schritt formiert (4,2 V bis 3 V, C/10, cccv (cv-Schritt bis I< 0,01 CA)). Im Anschluss wurden im gleichen Spannungsfenster, 300 Zyklen mit C/2 und einem sich jeweils anschließenden CV-Schritt zyklisiert (4,2 V bis 3 V, C/2, cccv (cv-Schritt bis I< 0,125 CA)).

**Tabelle 1:**

| **Elektrolytmischung** | **Entladekapazität Z1 [mAh/cm²]** | **Rückhalt Z100 [%]** | **Rückhalt Z300 [%]** |
|---|---|---|---|
| 1 nicht erfindungsgemäss | 1,80 | 63,1 | 46,4 |
| 2 mit Pentannitril/ Tributylamin | 1,79 | 79,2 | 69,8 |
| 3 mit FSN*/ Tributylamin | 1,85 | 80,0 | 69,9 |

| | | | |
|---|---|---|---|
| *FSN: 3-(Fluoro-dimethyl-silyl)-butan-nitril | | | |

Der Effekt des Pentannitrils/Tributylamins und FSN/Tributylamins ist sichtbar am Kapazitätsrückhalt in Tabelle 1: Es werden ca. 15 % Verbesserung nach 100 Zyklen und ca. 23 % Verbesserung nach 300 Zyklen gegenüber der Referenzelektrolytmischung (siehe Beispiel 1) erreicht.

Der gleiche Ausgangszustand (Beladung, Balancing) der Elektroden mit den Elektrolytmischungen 1, 2 und 3 wird belegt durch annährend gleiche Entladekapazität der Zellen im ersten Zyklus Z1.

## Patentansprüche

1. Elektrolyt, der
100 Gewichtsteile aprotisches Lösungsmittel,
1 bis 50 Gewichtsteile lithiumhaltiges Leitsalz,
5 bis 100 Gewichtsteile Vinylencarbonat,
0,5 bis 20 Gewichtsteile Nitril und
0,1 bis 10 Gewichtsteile Amin enthält.

2. Elektrolyt nach Anspruch 1, bei dem Nitrile von Mono- oder Polycarbonsäuren eingesetzt werden, die 2 bis 20 Kohlenstoffatome enthalten.

3. Elektrolyt nach einem oder mehreren der vorangehenden Ansprüche, der 1 bis 10 Gewichtsteile Nitril enthält.

4. Elektrolyt nach einem oder mehreren der vorangehenden Ansprüche, bei dem Monoamine der allgemeinen Formel (I)
NR¹R²R³ (I),
eingesetzt werden, in der
**R¹, R², R³** H oder einwertigen Kohlenwasserstoffrest mit 1-30 Kohlenstoffatomen, der substituiert sein kann mit Substituenten, die ausgewählt werden aus F-, Cl- und OR⁴, bei dem nicht benachbarte -CH₂-Einheiten ersetzt sein können durch Einheiten, die ausgewählt werden aus -C(=O)- und -0- und
**R⁴** Alkylrest mit 1-10 Kohlenstoffatomen bedeuten.

5. Elektrolyt nach einem oder mehreren der vorangehenden Ansprüche, bei dem Polyamine der allgemeinen Formel (II)
R⁵₂N-(CR⁶₂)ₐ-(NR⁷-(CR⁶₂)_{b})_{c}-NR⁵₂ (II),
eingesetzt werden, in der
**R⁵, R⁶, R⁷** H oder Kohlenwasserstoffreste mit 1-18 Kohlenstoffatomen, die substituiert sein können mit Substituenten, die ausgewählt werden aus F-, Cl- und OH- und bei denen nicht benachbarte -CH₂-Einheiten ersetzt sein können durch Einheiten, die ausgewählt werden aus -C(=O)- und -O-,
**a, b** ganzzahlige Werte von 1 bis 6 und
**c** den Wert 0 oder einen ganzzahligen Wert von 1 bis 40 bedeuten.

6. Elektrolyt nach einem oder mehreren der vorangehenden Ansprüche, der 0,5 bis 8 Gewichtsteile Amin enthält.

7. Elektrolyt nach einem oder mehreren der vorangehenden Ansprüche, der 10 bis 70 Gewichtsteile Vinylencarbonat enthält.

8. Elektrolyt nach einem oder mehreren der vorangehenden Ansprüche, bei dem das aprotische Lösungsmittel ausgewählt wird aus organischen Carbonaten, cyclischen und linearen Estern, cyclischen und linearen Ethern, Ketonen, Lactonen, Sulfolanen, Dimethylsulfoxid, Formamid, Dimethylformamid, 3-Methyl-1,3-oxazolidine-2-on und Gemischen dieser Lösungsmittel.

9. Elektrolyt nach einem oder mehreren der vorangehenden Ansprüche, bei dem das lithiumhaltige Leitsalz ausgewählt wird aus LiPF₆, LiBF₄, LiClO₄, LiAsF₆, LiSO₃CₓF₂ₓ₊₁, (LiB(C₂O₄)₂, LiBF₂(C₂O₄)), LiN(SO₂CₓF₂ₓ₊₁)₂ und LiC(SO₂CₓF₂ₓ₊₁)₃, wobei x ganzzahlige Werte von 0 bis 8 einnimmt, und deren Mischungen.

10. Lithium-Ionen-Batterie, welche Kthode, Anode, Separator und den Elektrolyten gemäß einem oder mehreren der vorangehenden Ansprüche umfasst.

11. Lithium-Ionen-Batterie nach Anspruch 10, welche eine Silicium enthaltende Anode umfasst.

## Claims

1. Electrolyte which comprises
100 parts by weight of aprotic solvent,
1 to 50 parts by weight of lithium-containing conducting salt,
5 to 100 parts by weight of vinylene carbonate,
0.5 to 20 parts by weight of nitrile and
0.1 to 10 parts by weight of amine.

2. Electrolyte according to Claim 1, wherein nitriles of monocarboxylic or polycarboxylic acids are used which contain 2 to 20 carbon atoms.

3. Electrolyte according to one or more of the preceding claims, which comprises 1 to 10 parts by weight of nitrile.

4. Electrolyte according to one or more of the preceding claims, wherein monoamines of the general formula (I)
NR¹R²R³ (I),
are used in which
**R¹, R² and R³** are H or monovalent hydrocarbyl having 1-30 carbon atoms, which may be substituted by substituents selected from F-, Cl- and OR⁴, wherein nonadjacent -CH₂-units may be replaced by units selected from -C(=O)- and -0-, and
**R⁴** is alkyl having 1-10 carbon atoms.

5. Electrolyte according to one or more of the preceding claims, wherein polyamines of the general formula (II)
R⁵₂N-(CR⁶₂)ₐ-(NR⁷-(CR⁶₂)_{b})_{c}-NR⁵₂ (II),
are used in which
**R⁵, R⁶ and R⁷** are H or hydrocarbyls having 1-18 carbon atoms, which may be substituted by substituents selected from F-, Cl- and OH-, and wherein nonadjacent -CH₂- units may be replaced by units selected from -C(=O)- and -0-,
**a and b** are integral values from 1 to 6 and
**c** has a value of 0 or an integral value from 1 to 40.

6. Electrolyte according to one or more of the preceding claims, which comprises 0.5 to 8 parts by weight of amine.

7. Electrolyte according to one or more of the preceding claims, which comprises 10 to 70 parts by weight of vinylene carbonate.

8. Electrolyte according to one or more of the preceding claims, wherein the aprotic solvent is selected from organic carbonates, cyclic and linear esters, cyclic and linear ethers, ketones, lactones, sulfolanes, dimethyl sulfoxide, formamide, dimethylformamide, 3-methyl-1,3-oxazolidin-2-one and mixtures of these solvents.

9. Electrolyte according to one or more of the preceding claims wherein the lithium-containing conducting salt is selected from LiPF₆, LiBF₄, LiClO₄, LiAsF₆, LiSO₃CₓF₂ₓ₊₁, LiB(C₂O₄)₂, LiBF₂(C₂O₄), LiN(SO₂CₓF₂ₓ₊₁)₂ and LiC(SO₂CₓF₂ₓ₊₁)₃ where x adopts integral values from 0 to 8, and mixtures thereof.

10. Lithium-ion battery which comprises cathode, anode, separator and the electrolyte according to one or more of the preceding claims.

11. Lithium-ion battery according to Claim 10, which comprises a silicon-containing anode.

## Revendications

1. Électrolyte, contenant
100 parties en poids de solvant aprotique,
1 à 50 parties en poids de sel conducteur contenant du lithium,
5 à 100 parties en poids de carbonate de vinylène,
0,5 à 20 partie en poids de nitrile et
0,1 à 10 parties en poids d'amine.

2. Électrolyte selon la revendication 1, dans lequel des nitriles d'acides monocarboxyliques ou polycarboxyliques contenant 2 à 20 atomes de carbone sont utilisés.

3. Électrolyte selon l'une ou plusieurs des revendications précédentes, qui contient 1 à 10 parties en poids de nitrile.

4. Électrolyte selon l'une ou plusieurs des revendications précédentes, dans lequel des monoamines de formule générale (I)
NR¹R²R³ (I),
sont utilisées, dans laquelle
R¹, R², R³ signifient H ou un radical hydrocarboné monovalent comprenant 1-30 atomes de carbone, qui peut être substitué par des substituants qui sont choisis parmi F, Cl et OR⁴, dans lequel des unités -CH₂- non adjacentes peuvent être remplacées par des unités qui sont choisies parmi -C(=O)- et -0- et
R⁴ signifie un radical alkyle comprenant 1-10 atomes de carbone.

5. Électrolyte selon l'une ou plusieurs des revendications précédentes, dans lequel des polyamines de formule générale (II)
R⁵₂N- (CR⁶₂)ₐ- (NR⁷- (CR⁶₂)_{b})_{c}-NR⁵₂ (II),
sont utilisées, dans laquelle
R⁵, R⁶, R⁷ signifient H ou des radicaux hydrocarbonés comprenant 1-18 atomes de carbone, qui peuvent être substitués par des substituants qui sont choisis parmi F, Cl et OH et dans lesquels des unités -CH₂-non adjacentes peuvent être remplacées par des unités qui sont choisies parmi -C(=O)- et -O-,
a, b signifient des valeurs entières de 1 à 6 et
c signifie la valeur 0 ou une valeur entière de 1 à 40.

6. Électrolyte selon l'une ou plusieurs des revendications précédentes, qui contient 0,5 à 8 parties en poids d'amine.

7. Électrolyte selon l'une ou plusieurs des revendications précédentes, qui contient 10 à 70 parties en poids de carbonate de vinylène.

8. Électrolyte selon l'une ou plusieurs des revendications précédentes, dans lequel le solvant aprotique est choisi parmi les carbonates organiques, les esters cycliques et linéaires, les éthers cycliques et linéaires, les cétones, les lactones, les sulfolanes, le diméthylsulfoxyde, le formamide, le diméthylformamide, la 3-méthyl-1,3-oxazolidin-2-one et les mélanges de ces solvants.

9. Électrolyte selon l'une ou plusieurs des revendications précédentes, dans lequel le sel conducteur contenant du lithium est choisi parmi LiPF₆, LiBF₄, LiClO₄, LiAsF₆, LiSO₃CₓF₂ₓ₊₁, LiB(C₂O₄)₂, LiBF₂(C₂O₄), LiN(SO₂CₓF₂ₓ₊₁)₂ et LiC (SO₂CₓF₂ₓ₊₁)₃, x ayant des valeurs entières de 0 à 8, et leurs mélanges.

10. Batterie au lithium-ion, qui contient une cathode, une anode, un séparateur et l'électrolyte selon l'une ou plusieurs des revendications précédentes.

11. Batterie au lithium-ion selon la revendication 10, qui comprend une anode contenant du silicium.
